# EUROPEAN PATENT APPLICATION

(11) **EP 3 266 584 A1**
(43) Date of publication of application: **10.01.2018**
(21) Application number: 16772500.1
(22) Date of filing: 23.03.2016
(51) Int. Cl.: B29C 45/14, B32B 15/085

(54) **SURFACE-TREATED METAL PLATE**

(30) Priority: 31.03.2015 JP 2015073907
(71) Applicant: Kabushiki Kaisha Kobe Seiko Sho (Kobe Steel, Ltd.), Kobe-shi, Hyogo 651-8585 (JP)
(72) Inventor: IWA, Tatsuhiko, Hyogo 675-0137 (JP); WATASE, Takeshi, Hyogo 675-0137 (JP); HIRANO, Yasuo, Hyogo 675-0137 (JP)
(74) Representative: Müller-Boré & Partner Patentanwälte PartG mbB
(86) International application number: PCT/JP2016/059235
(87) International publication number: WO 2016/158619

(57) **Abstract**

Provided is a surface-treated metal sheet for insert molding in which a polypropylene-based hot-melt adhesive with superior adhesion for resin for molded articles is laminated. Particularly, there is provided a surface-treated metal sheet which is used for insert molding and in which a hot melt adhesive layer is laminated on at least one side of a metal substrate, wherein the hot melt adhesive layer has a thickness of 10 to 100 µm; the hot melt adhesive layer contains two or more crystalline modified polypropylenes differing in melting point; at least one of the crystalline modified polypropylenes is a high melting point crystalline modified polypropylene having a melting point of 120°C or higher, and the high melting point crystalline modified polypropylene is contained in a content of 20% by mass or more in the hot melt adhesive layer; at least one of the crystalline modified polypropylenes is a low melting point crystalline modified polypropylene having a melting point of lower than 120°C, and the low melting point crystalline modified polypropylene is contained in a content of 10% by mass or more in the hot melt adhesive layer; and the rate of change of tensile shear adhesion strength measured at 23°C of a metal sheet-resin composite molded article obtained when uniting a polypropylene-based resin and the surface-treated metal sheet by insert molding while varying mold temperature is 2 MPa or less per °C of mold temperature.

## Description

### Technical Field

The present invention relates to a surface-treated metal sheet on a surface of which an adhesive layer is laminated and which is used while having been combined with resin by insert molding.

### Background Art

In the fields of household electrical appliances, information instruments, building materials, and materials for transportation vehicles, such as parts for ships and automobiles, members composed of metal and resin combined together are often used. For example, in Patent Literature 1 is disclosed a composite member produced by applying a urethane-curing type coating agent to a metal sheet, then inserting the metal sheet into a mold for injection molding, and then injecting a polyamide-based resin composition to combine them.

There are many alternative analogous technologies of such insert molding. For example, in Patent Literature 2 is disclosed a method for manufacturing an electronic instrument housing comprising applying an adhesive to a metal sheet and forming a rib part or a boss part from resin by insert molding.

In recent years, it has been practiced to laminate a polypropylene-based hot-melt adhesive to a surface-treated metal sheet. Many polypropylene-based hot-melt adhesives have been proposed as described in Patent Literature 3 to 8, for example. However, such conventional technologies do not account for insert molding.

### Citation List

### Patent Literature

Patent Literature 1: JP-A-2005-67111
Patent Literature 2: JP-A-7-124995
Patent Literature 3: JP-A-2009-126991
Patent Literature 4: JP-A-2000-226561
Patent Literature 5: JP-A-6-504082
Patent Literature 6: JP-A-8-500134
Patent Literature 7: JP-A-4-236288
Patent Literature 8: JP-A-2004-284575

### Summary of Invention

### Problems to be Solved by the Invention

The present inventors are investigating surface-treated metal sheets for insert molding using polypropylene-based hot-melt adhesive. However, there was a problem that adhesion strength between the hot-melt adhesive and the resin used for the molding (resin for molded articles) might be insufficient after injection molding.

Then, the challenges of the present invention include to identify the causes of the above problem and to provide a surface-treated metal sheet for insert molding in which a polypropylene-based hot-melt adhesive superior in adhesion for resin for molded articles is laminated.

### Means for Solving the Problems

In the case of using a high melting point crystalline modified polypropylene adhesive alone, the adhesion strength is highly impacted by the mold temperature at the time of injection molding. That is, when the adhesive is not brought to its melting point by the heat from the mold and the heat from the resin injected, sufficient adhesion strength cannot be developed. On the other hand, when making a low melting point crystalline modified polypropylene adhesive to be present together, it is expected to compensate the high melting point adhesive by sufficient melt of the low melting point adhesive. That the strength in Comparative Example 3 is low as compared, for example, with that of Example 1 in Table 3 can be attributed to that the high melting point adhesive was not melted sufficiently and there was no assistance of the low melting point adhesive.

The present invention that could solve the above-mentioned problem is a surface-treated metal sheet which is used for insert molding and in which a hot-melt adhesive layer is laminated on at least one side of a metal substrate, which is characterized in:
that the hot-melt adhesive layer has a thickness of 10 to 100 µm;
that the hot-melt adhesive layer contains two or more crystalline modified polypropylenes differing in melting point;
that at least one of the crystalline modified polypropylenes is a high melting point crystalline modified polypropylene having a melting point of 120°C or higher and the high melting point crystalline modified polypropylene is contained in a content of 20% by mass or more in the hot-melt adhesive layer;
that at least one of the crystalline modified polypropylenes is a low melting point crystalline modified polypropylene having a melting point of lower than 120°C and the low melting point crystalline modified polypropylene is contained in a content of 10% by mass or more in the hot-melt adhesive layer; and
that the rate of change of tensile shear adhesion strength measured at 23°C of a metal sheet-resin composite molded article obtained when uniting a polypropylene-based resin and the surface-treated metal sheet by insert molding while varying mold temperature is 2 MPa or less per °C of mold temperature.

It is preferable that a ratio of the high melting point crystalline modified polypropylene and the low melting point crystalline modified polypropylene be from 90 : 10 to 20 : 80 in mass ratio.

It is preferable that a chemical conversion treated coating film be formed between the metal substrate and the hot-melt adhesive layer and the chemical conversion coating film be one formed from a thermosetting resin composition comprising a thermosetting resin and colloidal silica. In this case, both the embodiment that the thermosetting resin is a water-based urethane resin, a water-based acrylic-modified epoxy resin, or a water-based phenolic resin and the embodiment that the thermosetting resin is a combination of a water-based carboxyl group-containing acrylic resin and a crosslinking agent capable of reacting with a carboxyl group are favorable. Moreover, the thermosetting resin composition may further comprise a silane coupling agent.

The embodiment that a chemical conversion coating film is formed between the metal substrate and the hot-melt adhesive layer, the metal substrate is a galvannealed steel sheet, and the chemical conversion coating film is one formed from a water-soluble resin composition comprising a water-soluble resin and colloidal silica is one preferable embodiment of the present invention. In this case, it is preferable that the water-soluble resin be a water-soluble urethane resin or a water-soluble acrylic resin.

The present invention also includes a metal sheet-resin composite molded article comprising a surface-treated metal sheet of the present invention, which is combined a polypropylene-based resin by insert molding.

### Effects of the Invention

The present invention has successfully provided a surface-treated metal sheet that can develop enhanced adhesion strength between resin and itself after being combined with the resin by insert molding.

### Brief Description of Drawings

FIG. 1 is a schematic view of a sample for measuring the tensile shear adhesion strength between a surface-treated metal sheet of the present invention and resin after insert molding.
FIG. 2 is a graph representing the relationship between the mold temperature and the tensile shear adhesion strength in Example 1.
FIG. 3 is a graph representing the relationship between the mold temperature and the tensile shear adhesion strength in Example 2.
FIG. 4 is a graph representing the relationship between the mold temperature and the tensile shear adhesion strength in Comparative Example 3.

### Description of Embodiments

The present inventors investigated to solve the above problem that adhesion strength between a hot-melt adhesive and a resin for molded articles is insufficient, and as a result, it has been revealed that temperature distribution has been yielded inside the mold. That is, in insert molding, a surface-treated metal sheet is loaded in a mold heated to about 50 to 70°C (this temperature is denoted by T1) and then a liquefied thermoplastic resin heated and melted at a temperature higher than 200°C (this temperature is denoted by T2) is introduced, so that the hot-melt adhesive is heated by the heat given by the thermoplastic resin to a temperature at which it becomes adherable (this temperature is denoted by T3). Thus, adhesion is realized.

Whether the temperature of the hot-melt adhesive can be raised to T3 depends on T1 and T2. Higher T1 and T2 make it easier to bring the hot-melt adhesive to T3, but if T1 and T2 are made higher, the following problems will arise. That is, when T1 is made higher, the time required for solidification of the thermoplastic resin becomes longer, deteriorating the productivity. On the other hand, when T2 is made higher, there may be an increase in thermal degradation of the thermoplastic resin and decrease in strength or change in color of the resin after solidification. Therefore, it is desirable to determine T1 and T2 which are necessary to attain T3 and are as low as possible.

On the other hand, it has been found by the present inventors that it is unexpectedly difficult to attain a constant T1 throughout a mold. While heating of the mold is practiced by flowing a heat medium such as water or oil at a prescribed temperature through a channel formed inside the wall of the mold or by inserting a plug-in heater into the wall of the mold, a temperature gradient is generated inside the mold because a limited number of channels or heaters are used in these methods. For this reason, there are some parts whose temperature becomes lower than T1 inside the core of the mold and, as a result, it becomes impossible to heat the hot-melt adhesive to T3, so that defective adhesion is expected to occur.

As a result of earnest investigation for suppressing such partial defective adhesion, the present inventors have accomplished the present invention by finding that even if there are some parts whose temperature is lower than T1 inside the core of the mold, adhesion can be realized stably by adding an appropriate amount of a hot-melt adhesive that becomes adherable at a temperature lower than T3 to a hot-melt adhesive whose adherable temperature is T3. The invention is described in detail below.

### [Hot-melt adhesive]

The hot-melt adhesive used for the present invention contains two or more crystalline modified polypropylenes (hereinafter, modified PPs). Of the two or more crystalline modified PPs, at least one species is a high melting point crystalline modified PP having a melting point of 120°C or higher. If such a high melting point crystalline modified PP is not contained in a content of 20% by mass or more in 100% by mass of the hot-melt adhesive, the strength of adhesion per se is low. Moreover, it is undesirable that a high melting point crystalline modified PP is not contained in a content of 20% by mass or more because when a liquefied resin for molded articles having been heated and melted is introduced into a mold at the time of insert molding, a hot-melt adhesive layer is forced to flow by pressure during the heating and the introduction and a part where the hot-melt adhesive layer is thinner is formed, leading to defective adhesion.

A modified polypropylene can be produced by, for example, adding maleic anhydride to polypropylene (PP).

As the high melting point crystalline modified PP having a melting point of 120°C or higher, "UNISTOLE (registered trademark) R-300" (melting point: 140°C), "UNISTOLE R-200" (melting point: 145°C), "UNISTOLE R-120K" (melting point: 150°C) (all produced by Mitsui Chemicals, Inc.), etc. can be used. In addition to the above, many products of modified PP have been placed in the market; for example, a modified PP may be selected from the "NOVATEC (registered trademark)" series and the "WINTEC (registered trademark)" series of Japan Polypropylene Corporation, the "Prime Polypro (registered trademark)" series of Prime Polymer Co., Ltd., etc. PP may be either a homopolymer or a random copolymer in which ethylene is copolymerized in a small amount (for example, 4% by mass or less). The melting point referred to in the present invention is a value measured using a DSC (manufactured by SII NanoTechnology Inc. (currently, Hitachi High-Tech Science Corporation)) at a temperature ramp-up rate of 20°C/minute.

The hot-melt adhesive of the present invention contains a low melting point crystalline modified PP having a melting point of lower than 120°C as the above-described hot-melt adhesive that becomes adherable at temperatures lower than T3 in a content of 10% by mass or less in 100% by mass of the hot-melt adhesive. As the low melting point crystalline modified PP having a melting point of lower than 120°C, "UNISTOLE H-100" (melting point: 75°C) produced by Mitsui Chemicals, Inc., etc. can be used.

The ratio of the high melting point crystalline modified PP and the low melting point crystalline modified PP is preferably from 90 : 10 to 20 : 80, more preferably from 80 : 20 to 50 : 50. The hot-melt adhesive of the present invention can be obtained by stirring the high melting point crystalline modified PP and the low melting point crystalline modified PP while heating them using a kneading machine such as a kneader.

The hot-melt adhesive layer can be applied using a method known in the art. The hot-melt adhesive layer may be provided on at least one side of the metal substrate or on the entire surface of the chemical conversion coating film or only in a place where that layer is necessary for combining with resin, and it may be provided in the form of some lines or dots, for example.

The thickness of the hot-melt adhesive layer is adjusted to 10 to 100 µm. If the thickness is thinner than 10 µm, sufficient adhesion strength cannot be acquired. This is thought to be due to that the adhesive layer is deformed by the flow of the injection molded resin and only a very thin adhesive layer can remain locally on the metal sheet. On the other hand, it is undesirable that the thickness exceeds 100 µm because if so, a large amount of deformation is generated in the adhesive layer by external force and even a small stress will cause fracture of the adhesive layer to result in defective adhesion.

### [Metal substrate]

As the metal substrate to be used for the present invention, any of aluminum sheet, titanium sheet, copper sheet, hot-rolled steel sheet, cold-rolled steel sheet, hot dip galvanized steel sheet, electro-galvanized steel sheet, galvannealed steel sheet, etc. can be used. Especially, galvannealed steel sheet is preferred. It is preferred to apply chemical conversion treatment mentioned below to such metal substrates.

### [Chemical conversion coating film]

Preferably, the surface-treated metal sheet of the present invention has a chemical conversion coating film formed from a thermosetting resin composition comprising a thermosetting resin and colloidal silica or has a chemical conversion coating film formed from a water-soluble resin composition comprising a water-soluble resin and colloidal silica, between the metal substrate and the hot-melt adhesive layer. Adhesion strength is thereby enhanced.

### [Colloidal silica]

The chemical conversion coating film of the present invention contains colloidal silica. This is because colloidal silica exhibits the effect of increasing corrosion resistance. "XS", "SS", "40", "N", "UP", etc. from the "Snowtex (registered trademark)" series (colloidal silica produced by Nissan Chemical Industries, Ltd.) can be advantageously used as the colloidal silica. The use of "Snowtex-40", which has a surface area average particle diameter of approximately 10 to 20 nm, is particularly preferred. The amount of colloidal silica is preferably about 50 to 150 parts by mass, more preferably 75 to 125 parts by mass, relative to 100 parts by mass of the thermosetting resin or the water-soluble resin.

### [Thermosetting resin]

A water-based urethane resin, a water-based acrylic-modified epoxy resin or a water-based phenolic resin is preferred as the thermosetting resin. In the present invention, "water-based" means being soluble in water or dispersible in water (insoluble in water). The water-soluble resin as used herein refers to resin that dissolves in a concentration of 1% by mass or more in water at 25°C, preferably resin that dissolves in a concentration of 5% mass or more. Resin from which a visually homogeneous transparent solution can be formed by adjusting pH to 5 to 9 with an alkali or the like is also included in the water-soluble resin.

As the water-based urethane resin, one prepared by reacting a polyisocyanate and a polyol with a dihydroxyalkanoic acid is preferable, and what is more preferable is one prepared by synthesizing a urethane prepolymer from a polyisocyanate, a polyol and a hydroxyalkanoic acid and then making the urethane prepolymer undergo a chain extension reaction.

Examples of the polyisocyanate include yellowing polyisocyanates such as 4,4'-diphenylmethane diisocyanate, 2,4'-diphenylmethane diisocyanate, 2,2'-diphenylmethane diisocyanate, 2,4-toluene diisocyanate, 2,6-toluene diisocyanate, 4,4-toluene diisocyanate, 1,4-naphthalene diisocyanate, 1,5-naphthalene diisocyanate, 1,2-phenylene diisocyanate, 1,3-phenylene diisocyanate and 1,4-phenylene diisocyanate; yellowing-resistant polyisocyanates such as o-xylylene diisocyanate, p-xylylene diisocyanate and m-xylylene diisocyanate; non-yellowing polyisocyanates such as 4,4'-dicyclomethane diisocyanate, 2,4'-dicyclomethane diisocyanate, 2,2'-dicyclomethane diisocyanate, hexamethylene diisocyanate, tetramethylxylylene diisocyanate, isophorone diisocyanate and lysine diisocyanate; and polymers such as crude toluene diisocyanate and polyphenylene-polymethylene isocyanate. These polyisocyanates may be adducts. It is possible to use one of these polyisocyanates, or a mixture of two or more types thereof.

Examples of the polyol include 1,4-cyclohexane diol, 1,4-cyclohexane dimethanol, bisphenol A, bisphenol F and bisphenol S.

Examples of dihydroxyalkanoic acids include 2,2-dimethylol acetic acid, 2,2-dimethylol propionic acid, 2,2-dimethylol butyric acid and dimethylol butanoic acid, but from perspectives such as reactivity and solubility, the use of dimethylol propionic acid or dimethylol butanoic acid is preferred.

Examples of preferred chain extenders include polyamines, such as ethylene diamine or propylene diamine.

Examples of such a water-based urethane resin include "Superflex (registered trademark) 170" and "Superflex (registered trademark) 210" (both of which are produced by Dai-Ichi Kogyo Seiyaku Co., Ltd.).

The water-based acrylic-modified epoxy resin can be produced by, for example, copolymerizing (meth)acrylic acid with a polymerizable unsaturated group-containing epoxy resin obtained by reacting an epoxy resin with an unsaturated fatty acid or by copolymerizing (meth)acrylic acid with a polymerizable unsaturated group-containing epoxy resin obtained by reacting an epoxy resin, a glycidyl group-containing vinyl monomer and amines.

In particular, water-based acrylic-modified epoxy resins are commercially available, and examples thereof include "Modepics (registered trademark) 301 ", "Modepics (registered trademark) 302", "Modepics (registered trademark) 303" and "Modepics (registered trademark) 304", all of which are manufactured by Arakawa Chemical Industries, Ltd. It is possible to use one of these acrylic-modified epoxy resins, or a combination of two or more types thereof.

Water-based phenolic resins include products of addition condensation reactions between a compound having a phenolic -OH group, such as phenol, cresol, p-alkylphenol compounds, p-phenylphenol, chlorophenol, bisphenol A, phenolsulfonic acid and resorcin, and an aldehyde, such as formalin or furfural, and there are many types of such water-based phenolic resins. Of these, a preferred example is the emulsion type "Sumilite Resin (registered trademark) PR-14170" (produced by Sumitomo Bakelite Co., Ltd.).

The thermosetting resin contained in the chemical conversion coating film in the present invention also includes resins obtained by combining a thermoplastic resin and a crosslinking agent, and such a combination is cured and loses thermoplasticity when heated, and can therefore be called a type of thermosetting resin. A water-based carboxyl group-containing acrylic resin can be advantageously used in the present invention as this type of resin.

The water-based carboxyl group-containing acrylic resin is an alkali-neutralized product of a copolymer of 50 mass% or less of an unsaturated carboxylic acid, such as (meth)acrylic acid, and a (meth)acrylic acid ester or the like. Specific examples of (meth)acrylic acid esters include methyl (meth)acrylate, ethyl (meth)acrylate, butyl (meth)acrylate, 2-ethylhexyl (meth)acrylate, iso-octyl (meth)acrylate, iso-nonyl (meth)acrylate, isobornyl (meth)acrylate, N,N-dimethylaminoethyl (meth)acrylate, iso-butyl (meth)acrylate and 4-hydroxybutyl (meth)acrylate. Commercially available water-based carboxyl group-containing acrylic resins include the water-soluble "Jurymer (registered trademark) ET-410" (produced by Toagosei Co., Ltd.).

The crosslinking agent to be combined with the water-based carboxyl group-containing acrylic resin is preferably a crosslinking agent capable of reacting with a carboxyl group, and specifically, an epoxy-based crosslinking agent or a carbodiimide compound is preferable. Examples of epoxy-based crosslinking agents include poly(glycidyl ethers) such as sorbitol poly(glycidyl ether), (poly)glycerol poly(glycidyl ether), pentaerythritol poly(glycidyl ether), trimethylolpropane poly(glycidyl ether), neopentylglycol diglycidyl ether and (poly)ethylene glycol diglycidyl ether, and polyglycidylamines.

In addition, the carbodiimide compound can be produced by heating isocyanates in the presence of a carbodiimidation catalyst, and can be rendered water-based (water-soluble, water-emulsifiable or water-dispersible) by means of modification. In the present invention, a water-based carbodiimide compound is preferred because it is preferable for the coating liquid used to form the chemical conversion coating film to be water-based. In addition, a compound containing a plurality of carbodiimide groups per molecule is preferred. If a plurality of carbodiimide groups are present in one molecule, it is possible to further improve corrosion resistance or the like as a result of crosslinking reactions with carboxyl groups in the resin component.

Examples of commercially available polycarbodiimide compounds include the "Carbodilite (registered trademark)" series, which are polycarbodiimide compounds (polymers having a plurality of carbodiimide groups per molecule) manufactured by Nisshinbo Chemical Inc. Preferred grades of the "Carbodilite (registered trademark)" series include the water-soluble "SV-02", "V-02", "V-02-L2" and "V-04" and the emulsion type "E-01" and "E-02". These carbodiimide compounds can be combined with the urethane resin mentioned above. The carbodiimide compound is preferably blended at a quantity of 5 to 20 parts by mass relative to 100 parts by mass of the water-based carboxyl group-containing acrylic resin or the water-based urethane resin.

### [Water-soluble resin]

As the water-soluble resin, a water-soluble urethane resin is preferable, and a water-soluble self-crosslinking type urethane resin having a block isocyanate group is preferable. As such a water-soluble polyurethane resin, the "ELASTRON (registered trademark)" series produced by Dai-Ichi Kogyo Seiyaku Co., Ltd. can be mentioned, and especially, "ELASTRON MF-25K" is particularly preferable.

A water-soluble acrylic resin may be used as the water-soluble resin. Acrylic resin is also superior in adhesiveness with plastics and can realize high corrosion resistance. Examples of such water-soluble acrylic resin include the "AQUPEC (registered trademark)" series produced by Sumitomo Seika Chemicals Co., Ltd., and especially, "AQUPEC HV-501" is particularly preferable.

### [Water-based resin]

The chemical conversion coating film formed from the water-soluble resin comprising the water-soluble resin and colloidal silica may further contain a water-based resin. As the water-based resin, a water-based urethane resin is preferable in respect of performance, and an aqueous dispersion (emulsion) of urethane resin is favorable because it can be mixed with the water-based resin easily. Examples of the aqueous dispersion of urethane resin include the above-mentioned "Superflex (registered trademark)" series produced by Dai-Ichi Kogyo Seiyaku Co., Ltd., and especially, "Superflex 170" is preferred. It is desirable for the aqueous dispersion of urethane resin to be used in combination with a water-soluble urethane resin, and it is preferable to use the water-based resin in an amount of 10 to 50 parts by mass relative to 10 parts by mass of the water-soluble resin. At this time, it is preferable to use the above-described carbodiimide compound in combination as a crosslinking agent.

### [Silane coupling agent]

It is preferable to blend a silane coupling agent in the coating liquid used to form the chemical conversion coating film. It is possible to improve the adhesive properties of the chemical conversion coating film to the metal substrate. Specific examples of silane coupling agents include amino group-containing silane coupling agents such as γ-aminopropyltrimethoxysilane, γ-aminopropyltriethoxysilane, N-(β-aminoethyl)-γ-aminopropyltrimethoxysilane and N-(β-aminoethyl)-γ-aminopropylmethyldimethoxysilane; glycidoxy group-containing silane coupling agents such as γ-glycidoxypropyltrimethoxysilane, γ-glycidoxypropylmethyldimethoxysilane, γ-glycidoxypropyltriethoxysilane and γ-glycidoxymethyldimethoxysilane; vinyl group-containing silane coupling agents such as vinyltrimethoxysilane, vinyltriethoxysilane and vinyl-tris(β-methoxyethoxy)silane; methacryloxy group-containing silane coupling agents such as γ-methacryloxypropyltrimethoxysilane; mercapto group-containing silane coupling agents such as γ-mercaptopropyltrimethoxysilane and γ-mercaptopropylmethyldimethoxysilane; and halogen group-containing silane coupling agents such as γ-chloropropylmethoxysilane and γ-chloropropyltrimethoxysilane. It is possible to use one of these silane coupling agents, or a combination of two or more types thereof. Of these, amino group-containing silane coupling agents and glycidoxy group-containing silane coupling agents are preferred from the perspective of achieving good bonding strength of the ultimately obtained metal sheet-resin composite molded article, and amino group-containing silane coupling agents are particularly preferred. It is preferable that the quantity of the silane coupling agent be about 5 to 30 parts by mass relative to 100 parts by mass of the total solid content in the coating liquid for forming the chemical conversion coating film.

### [Thermosetting resin composition and water-soluble resin composition]

A thermosetting resin composition is obtained by mixing the above-mentioned thermosetting resin, colloidal silica and, if necessary, a silane coupling agent or a crosslinking agent, and, if necessary, a thermosetting coating liquid for forming a chemical conversion coating film is obtained by diluting that composition with a hydrophilic solvent such as water and alcohol. Additionally, a water-soluble resin composition is obtained by mixing the above-mentioned water-soluble resin, colloidal silica and, if necessary, a silane coupling agent, a water-based resin or a crosslinking agent, and, if necessary, a water-soluble coating liquid for a chemical conversion coating film is obtained by diluting that composition with a hydrophilic solvent such as water and alcohol.

The attachment of chemical conversion coating film is preferably adjusted to 0.01 to 1 g/m², more preferably adjusted to 0.05 to 0.5 g/m² either in the case of thermosetting or in the case of being water-soluble. If the attachment is excessively small, the adhesion strength enhancing effect exerted by the chemical conversion coating film may be insufficient. Attachment in an amount greater than 1 g/m² leads to waste of cost because the adhesion strength enhancing effect is saturated.

### [Formation of chemical conversion coating film]

Other publicly known additives may be added to the coating liquid when forming the chemical conversion coating film. The method for forming a chemical conversion coating film on a metal substrate, such as a galvannealed steel sheet, is not particularly limited, and a conventional publicly known coating method may be used, for example, it is possible to apply a coating liquid for forming a chemical conversion coating film on one surface or both surfaces of a metal substrate, such as a galvannealed steel sheet, using a roll coating method, a spray coating method, a curtain flow coating method, or the like, and then heating and drying the liquid. Since the coating liquid for forming a chemical conversion coating film to be used for the present invention is water-based, it is desirable to carry out heating for a period of between several tens of seconds and several minutes at a temperature of approximately 100°C, at which water evaporates.

### [Metal sheet-resin composite molded article]

The surface-treated metal sheet of the present invention is combined with a resin molding by insert molding. Here, if processing is required, the surface-treated metal sheet is processed into the target shape in advance. Then, the surface-treated metal sheet is loaded into a mold of an injection molding machine with the adhesive layer on top so that the adhesive layer and the resin for molded articles can come into contact with each other, and the mold is closed and clamped. Then, molten resin for molded articles is injected into the mold, and when the resin is cooled and solidified, a metal sheet-resin composite molded article is obtained (insert molding). Of course, the surface-treated metal sheet of the present invention may be combined with a resin by means of a press molding method, but it is preferable to use an injection molding method because of advantages such as the short period of time required for injection molding and the high efficiency thereof.

The conditions of injection molding may suitably be changed according to the type of the resin to constitute a molded article; when taking the case that the resin for the molded article is polypropylene as an example, the cylinder temperature can be set to 230 to 250°C, the mold temperature can be set to 45 to 70°C, the injection holding time can be set to 5 to 8 seconds, and the cooling time can be set to about 20 to 30 seconds. By performing injection molding under these conditions, it is possible to obtain a combined member of the present invention in which an adhesive is strongly bonded to a surface-treated metal sheet.

The resin for molded articles can be any known resin for molded articles and is not particularly limited, but examples of a preferred resin include polypropylene-based resins, etc. In order to increase strength as a molded article, it is possible to add approximately 5 to 60 mass% of reinforcing fibers such as glass fibers or carbon fibers. In addition, it is possible to add a variety of additives known in the art, such as pigments and dyes, flame retardants, antimicrobial agents, antioxidants, plasticizers and lubricants.

The surface-treated metal sheet of the present invention is characterized in that the rate of change of tensile shear adhesion strength measured at 23°C of a metal sheet-resin composite molded article obtained when uniting a polypropylene-based resin and the surface-treated metal sheet by insert molding while varying mold temperature is 2 MPa or less per °C of mold temperature. That the rate of change of tensile shear adhesion strength is greater than 2 MPa per °C of mold temperature means that if the temperature inside the core of the mold varies by 1°C, adhesion strength varies by more than 2 MPa and defective adhesion is prone to occur. The rate of change is preferably 1.5 MPa or less, more preferably 1.3 MPa or less, per °C of mold temperature. In order to evaluate the performance of a metal sheet-resin composite molded article, it is preferable to measure the rate of change of tensile shear adhesion strength while varying the mold temperature within a range of a target temperature of ±2°C. The value of the tensile shear adhesion strength itself is preferably 10 MPa or more as measured by a measurement method described later.

The present application claims benefit of the priority based on Japan Patent Application No. 2015-073907 filed on March 31, 2015. The disclosure of the specification of Japan Patent Application No. 2015-073907 is incorporated herein by reference in its entirety.

### Examples

The present invention will now be explained in greater detail through the use of the examples given below, but is not limited to the examples given below, and any change does not deviate from the gist of the present invention is encompassed by the present invention. In the following, "part" means "part by mass" and "%" means "% by mass." The evaluation methods used in Examples are as follows.

### [Production of a chemical conversion treated steel sheet]

Chemically treated metal sheets were obtained by applying a coating liquid for forming a chemical conversion coating film at a coating amount of 0.5 g/m² on a surface of a galvannealed steel sheet having a thickness of 1.0 mm (the amount of galvanization: 45 g/m²) using a bar coater, and then heating for 1 minute at 100°C. The particulars of the resins and the crosslinking agents are given in Table 1, and the compositions of the coating liquids (the added amounts are in terms of solid content) are given in Table 2. Moreover, the "Superflex", "Sumilite Resin", "Modepics", "Jurymer", "Elastron", "AQUPEC", "Superflex" and "Jurymer" mentioned in Tables 1 and 2 are all registered trademarks held by the respective manufacturers. In addition, the "ST-40" shown in the Colloidal silica column is "Snowtex (registered trademark) 40" (produced by Nissan Chemical Industries, Ltd.; surface area average particle diameter: 10 to 20 nm), and the "KBM903" shown in the silane coupling agent column is γ-aminopropyltrimethoxysilane, produced by Shin-Etsu Chemical Co., Ltd.

**[Table 1]**

| Resin | | |
|---|---|---|
| Type | Brand | Manufacturer |
| Polyurethane emulsion | Superflex 170 Solid content: 33% | Dai-Ichi Kogyo Seiyaku Co., Ltd. |
| Phenolic resin emulsion | Sumilite Resin PR-14170 Solid content: 65% | Sumitomo Bakelite Co., Ltd. |
| Acrylic-modified epoxy resin emulsion | Modepics 302 Solid content: 33% | Arakawa Chemical Industries, Ltd. |
| Water-soluble carboxyl group-containing acrylic resin | Jurymer ET-410 Solid content: 30% | Toagosei Co., Ltd. |
| Water-soluble urethane resin | Elastron MF-25K Solid content: 26% | Dai-Ichi Kogyo Seiyaku Co., Ltd. |
| Water-soluble acrylic resin | AQUPEC HV-501 powder | Sumitomo Seika Chemicals Co., Ltd. |

| Crosslinking agent | | |
|---|---|---|
| Type | Brand | Manufacturer |
| Carbodiimide compound | Carbodilite SV-02 Solid content: 40% | Nisshinbo Chemical Inc. |

**[Table 2]**

| Coating liquid No. | Resin 1 | | Resin 2 | | Crosslinking agent | | Colloidal silica | | Silane coupling agent | |
|---|---|---|---|---|---|---|---|---|---|---|
| | Brand | Amount (parts) | Brand | Amount (parts) | Brand | Amount (parts) | Brand | Amount (parts) | Brand | Amount (parts) |
| 1 | Superflex 170 | 45 | - | - | Carbodilite SV-02 | 5 | ST-40 | 50 | KBM903 | 10 |
| 2 | Sumilite Resin PR-14170 | 50 | - | - | - | - | ST-40 | 50 | KBM903 | 10 |
| 3 | Modepics 302 | 50 | - | - | - | - | ST-40 | 50 | KBM903 | 10 |
| 4 | Jurymer ET-410 | 45 | - | - | Carbodilite SV-02 | 5 | ST-40 | 50 | KBM903 | 10 |
| 5 | Elastron MF-25K | 40 | - | - | - | - | ST-40 | 50 | KBM903 | 10 |
| 6 | AQUPEC HV-501 | 20 | - | - | - | - | ST-40 | 70 | KBM903 | 10 |
| 7 | Elastron MF-25K | 20 | Superflex 170 | 17 | Carbodilite SV-02 | 2 | ST-40 | 50 | KBM903 | 10 |

### [Provision of hot-melt adhesive layer] (Examples 1 to 10, Comparative Examples 1 to 5)

To a surface of a chemical conversion treated metal sheet was applied with a bar coater a hot-melt adhesive prepared by blending at a blending ratio shown in Table 3, followed by heating for two minutes such that the maximum sheet temperature would be 220°C. Thus, a surface-treated metal sheet with a 35 µm-thick hot-melt adhesive layer laminated was obtained. R-300 denotes " UNISTOLE R-300" (melting point: 140°C), H-100 denotes " UNISTOLE H-100" (melting point: 75°C), R-200 denotes " UNISTOLE R-200" (melting point: 145°C), and R-120K denotes " UNISTOLE R-120K" (melting point: 150°C) (all produced by Mitsui Chemicals, Inc.).

### [Production of metal sheet-resin composite molded article]

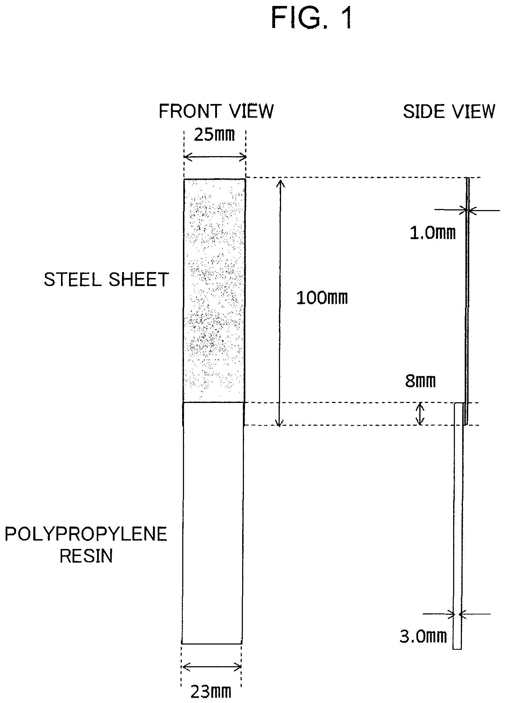

A surface-treated steel sheet having a size of 100 mm × 25 mm was mounted to an injection mold and then glass fiber-containing PP in a molten state was introduced thereinto. The glass fiber-containing PP used was one prepared by mixing "PLASTRON (registered trademark) PP-GF40" (produced by Daicel Polymer Ltd., containing 40% of glass fiber) with "NOVATEC (registered trademark) PP BC06C" (produced by a Japan Polypropylene Corporation) to dilute glass fiber to a content of 20%. The temperature of the glass fiber-containing PP in a molten state was adjusted to 230°C and the target mold temperature was set to 60°C except Comparative Examples 4 and 5. In Comparative Examples 4 and 5, since the melting point of the hot-melt adhesive used was high, the target mold temperature was set to 63°C and 65°C, respectively. The volume of a part in the core of the mold into which the glass fiber-containing PP was to be poured was 23 mm in width, 100 mm in length, and 3 mm in thickness, and the hot-melt adhesive layer and the glass fiber-containing PP for molding were configured to come into contact with each other in a region sized 23 mm × 8 mm. In FIG. 1 are provided a front view and a side view of the specimen obtained.

### [Measurement of tensile shear adhesion strength]

Strength at break developed when pulling a specimen with a tensile tester at an environmental temperature of 23°C and a tensile rate of 60 mm/min, and the measured value was taken as a tensile shear adhesion strength.

**[Table 3]**

| | Coating liquid No. | Blending ratio of hot-melt adhesives | | | | Adhesion strength at target mold temperature: 60°C (MPa) |
|---|---|---|---|---|---|---|
| | | R-300 (Tm140°C) | H-100 (Tm75°C) | R-200 (Tm145°C) | R-120K (Tm150°C) | |
| Example 1 | 1 | 90 | 10 | - | - | 13.8 |
| Example 2 | | 80 | 20 | - | - | 14.3 |
| Example 3 | | 50 | 50 | - | - | 14.1 |
| Example 4 | | 20 | 80 | - | - | 10.4 |
| Comparative Example 1 | | 10 | 90 | - | - | 8.2 |
| Comparative Example 2 | | - | 100 | - | - | 9.0 |
| Comparative Example 3 | | 100 | - | - | - | 9.0 |
| Comparative Example 4 | | - | - | 100 | - | 10.3¹⁾ |
| Comparative Example 5 | | - | - | - | 100 | 9.5²⁾ |
| Example 5 | 2 | 80 | 20 | - | - | 14.0 |
| Example 6 | 3 | 80 | 20 | - | - | 13.3 |
| Example 7 | 4 | 80 | 20 | - | - | 12.8 |
| Example 8 | 5 | 80 | 20 | - | - | 13.3 |
| Example 9 | 6 | 80 | 20 | - | - | 13.9 |
| Example 10 | 7 | 80 | 20 | - | - | 14.3 |

| | | | | | | |
|---|---|---|---|---|---|---|
| 1) Target mold temperature: 63°C 2) Target mold temperature: 65°C | | | | | | |

**[Table 4]**

| Substrate | Mold temperature (°C) | Adhesion strength (MPa) | Rate of change of adhesion strength when mold temperature varies by 1°C (MPa) |
|---|---|---|---|
| Example 1 | 58.7 | 14.2 | 1.1 |
| | 60.0 | 13.8 | |
| | 61.0 | 11.6 | |
| Example 2 | 59.1 | 16.0 | 1.2 |
| | 60.4 | 14.3 | |
| | 61.1 | 13.6 | |
| Comparative Example 3 | 60.0 | 9.0 | 3.6 |
| | 60.8 | 11.9 | |
| | 61.6 | 14.8 | |
| Comparative Example 4 | 62.8 | 9.1 | 4.0 |
| | 63.1 | 10.3 | |
| | 63.5 | 11.9 | |
| Comparative Example 5 | 64.2 | 7.3 | 4.4 |
| | 64.7 | 9.5 | |
| | 65.6 | 13.4 | |

Table 3 shows that the surface-treated metal sheets of Examples 1 to 10, which satisfy the requirements of the present invention, are superior in tensile shear adhesion strength.

In contrast, Comparative Example 1, in which the high melting point crystalline modified polypropylene is contained only less than 20% by mass in the hot-melt adhesive layer, was inferior in tensile shear adhesion strength. Moreover, Comparative Example 2, in which only the low melting point crystalline modified polypropylene is contained, was inferior in tensile shear adhesive strength.

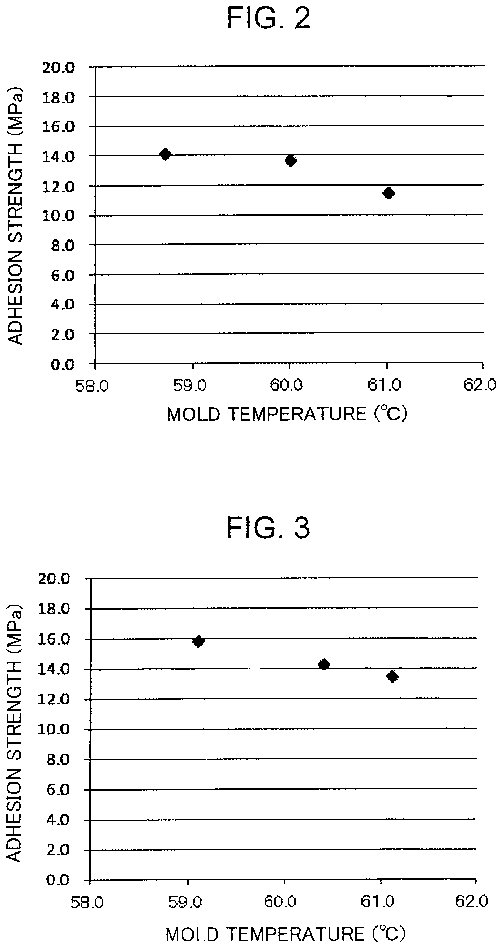

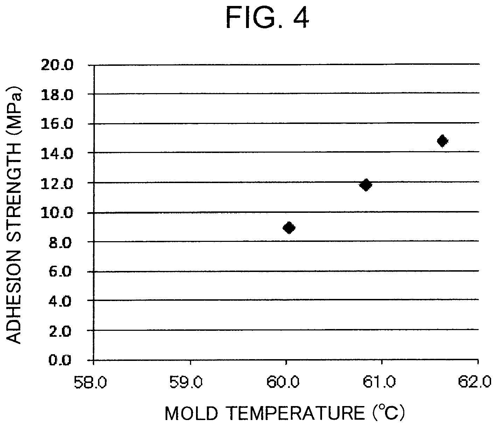

Table 4 shows that the rate of change of adhesion strength developed when mold temperature varied 1°C is as small as 1.1 to 1.2 MPa in the Examples whereas the rate of change of adhesion strength is as large as 3.6 MPa or more in Comparative Examples 3 to 5, in which only the high melting point crystalline modified polypropylene is contained. In FIG. 2 is provided a graph showing the relationship between mold temperature and tensile shear adhesion strength in Example 1, in FIG. 3 is provided a graph showing the relationship between mold temperature and tensile shear adhesion strength in Example 2, and in FIG. 4 is provided a graph showing the relationship between mold temperature and tensile shear adhesion strength in Comparative Example 3.

### Industrial Applicability

The present invention has successfully provided a surface-treated metal sheet that can develop enhanced adhesion strength between resin and itself after being combined with the resin by insert molding. Therefore, the surface-treated metal sheet of the present invention is useful for producing items composed of metal and resin combined together in the fields of household electrical appliances, information instruments, building materials, and materials for transportation vehicles, such as parts for ships and automobiles.

## Claims

1. A surface-treated metal sheet which is used for insert molding and in which a hot-melt adhesive layer is laminated on at least one side of a metal substrate, wherein
the hot-melt adhesive layer has a thickness of 10 to 100 µm;
the hot-melt adhesive layer contains two or more crystalline modified polypropylenes differing in melting point;
at least one of the crystalline modified polypropylenes is a high melting point crystalline modified polypropylene having a melting point of 120°C or higher, and the high melting point crystalline modified polypropylene is contained in a content of 20% by mass or more in the hot-melt adhesive layer;
at least one of the crystalline modified polypropylenes is a low melting point crystalline modified polypropylene having a melting point of lower than 120°C, and the low melting point crystalline modified polypropylene is contained in a content of 10% by mass or more in the hot-melt adhesive layer; and
the rate of change of tensile shear adhesion strength measured at 23°C of a metal sheet-resin composite molded article obtained when uniting a polypropylene-based resin and the surface-treated metal sheet by insert molding while varying mold temperature is 2 MPa or less per °C of mold temperature.

2. The surface-treated metal sheet according to claim 1, wherein a ratio of the high melting point crystalline modified polypropylene and the low melting point crystalline modified polypropylene is from 90 : 10 to 20 : 80 in mass ratio.

3. The surface-treated metal sheet according to claim 1 or 2, wherein a chemical conversion coating film is formed between the metal substrate and the hot-melt adhesive layer, and the chemical conversion coating film is one formed from a thermosetting resin composition comprising a thermosetting resin and colloidal silica.

4. The surface-treated metal sheet according to claim 3, wherein the thermosetting resin is a water-based urethane resin, a water-based acrylic-modified epoxy resin, or a water-based phenolic resin.

5. The surface-treated metal sheet according to claim 3, wherein the thermosetting resin is a combination of a water-based carboxyl group-containing acrylic resin and a crosslinking agent which is capable of reacting with a carboxyl group.

6. The surface-treated metal sheet according to claim 3, wherein the thermosetting resin composition further comprises a silane coupling agent.

7. The surface-treated metal sheet according to claim 1, wherein a chemical conversion coating film is formed between the metal substrate and the hot-melt adhesive layer; the metal substrate is a galvannealed steel sheet; and the chemical conversion coating film is one formed from a water-soluble resin composition comprising a water-soluble resin and colloidal silica.

8. The surface-treated metal sheet according to claim 7, wherein the water-soluble resin is a water-soluble urethane resin or a water-soluble acrylic resin.

9. A metal sheet-resin composite molded article comprising the surface-treated metal sheet according to claim 1, which is combined with a polypropylene-based resin by insert molding.
